# EUROPEAN PATENT SPECIFICATION

(11) **EP 1 733 628 B1**
(45) Date of publication and mention of the grant of the patent: **14.01.2009**
(21) Application number: 06115307.8
(22) Date of filing: 12.06.2006
(51) Int. Cl.: A23L 1/00, A23P 1/02

(54) **Process for granulation of high lipid content processed foods and product thereof**
Verfahren zur Granulation einem Lebensmittel mit hohem Lipidgehalt und Produkt daraus
Procédé de granulation d'aliments riches en lipides et produit dérivé du procédé

(30) Priority: 15.06.2005 US 152387
(43) Date of publication of application: 20.12.2006
(73) Proprietor: Kraft Foods Global Brands LLC, Northfield, Illinois 60093 (US)
(72) Inventor: Shah, Manoj, Lindenhurst, 60046 (US); Remily, Nicole, Richland, MI 49083 (US); Neale, Kristin, Milwaukee, WI 53202 (US); Kopp, Gabriele, 81825, Munich (DE)
(74) Representative: Smaggasgale, Gillian Helen

(56) References cited:
- GB-A- 1 243 396
- US-A1- 2002 027 173
- US-A1- 2003 155 454
- US-A1- 2005 132 893
- PATENT ABSTRACTS OF JAPAN vol. 2003, no. 07, 3 July 2003 (2003-07-03) & JP 2003 080297 A (KANKYO GIJUTSU KAIHATSU KK), 18 March 2003 (2003-03-18)

## Description

### FIELD OF THE INVENTION

The invention generally relates to a process for grinding of low-moisture, high-lipid content processed foods for re-use in food manufacture.

### BACKGROUND OF THE INVENTION

In the production of many types of food products, some unused processed food portions are sometimes left as trimmings, shreds, offcuts, fragments, and so forth, after a batch run or other production run. Also, small quantities of processed food product that may not conform to a desired shape or configuration may be rejected and not used in a commercial product. Ideally, such unused portions and/or small quantities are combined with larger quantities for use as rework in subsequent food production. This often requires heating, mechanical grinding, milling or other processing steps to reform the processed food into a more convenient or stable form, which can lead to difficulties.

Farinaceous (starch-containing) foods can be subject to gelatinization or other significant physico-chemical transformations upon heat treatment or exposure to heat associated with conventional grinding or milling operations. For commercial reasons, control of gelatinization of farinaceous material in some food systems is important as it may have a direct impact on final product quality, particularly product texture. In addition, the degree of gelatinization of farinaceous material in food systems also impacts the processing rheology of a starch melt/dough or similar foodstuff. This may affect the expansion and bubble growth kinetics of the food product. A farinaceous food material may not be economically and/or functionally useful in further processed food production if the original starch content becomes unduly degraded.

Arrangements are needed for reforming dry or low moisture, high-lipid content processed foods at a high recovery rate in a shelf-stable, food grade, functional form for re-use. The invention addresses the above and other needs in an efficient and economically feasible manner.
A vortex mill for milling a substantially particulate solid material is described in US2003/0155454. The vortex mill includes one or more working chambers, one or more working fluid inlets and one or more discharge ports. One or more working fluid inlets together with one or more discharge ports facilitate the vortex flow within the one or more working chambers. There are also one or more feed inlets to provide milling of the solid material which is discharged from one or more discharge ports. In addition, there is apparatus for inducing controlled perturbations in the flow of the working fluid in the one or more working chambers, thereby to improve the milling of the solid material in the vortex flow.

### SUMMARY OF THE INVENTION

This invention provides a process for grinding high lipid content processed foods into re-usable food grade, functional granular forms. This process executes the treatment in a short-duration operation that substantially preserves desirable functional aspects of the processed foods which are useful for further food manufacture. Grinding may be effected without the need to contact the high lipid processed food with any moving mechanical parts. Essentially all the high lipid processed food material of certain processes may be incorporated into food products.

In some embodiments, low-moisture (less than 14wt.% total water content), high-lipid processed foods which may be reformed via single-stage treatment include filled food products, for example, foods containing a grain-based ingredient in one portion and a lipid-containing filling ingredient in another portion thereof. In one embodiment, the lipid content of the processed foods treatable by processes herein is at least 15 wt.%, and particularly 15 wt.% to 60 wt.%. Such filled products may include, for example, snack, baked goods or pastry products in encapsulated, sandwich, co-extruded forms. Non-limiting examples include, for instance, flavored cream-filled dough products, cheese-filled dough products, and peanut butter-filled dough products, and so forth. The filled products may include filled sandwich dough products, enrobed-filling dough products, such as filled or enrobed cookies, snack bars, and/or crackers, and the like. For purposes of this invention, "processed foods" encompasses finished process foods as well as partly processed raw food materials such as cocoa nibs.

In one particular embodiment, the single-stage grinding treatment effectively granulates low-moisture, high-lipid processed foods containing farinaceous material without inducing significant or uncontrolled transformations in the lipid or farinaceous content. Lipid and starch content of the low-moisture, high-lipid foods is substantially maintained through the grinding process, and thus is available for re-use in subsequent food production. They also may be re-used at relatively high levels in further food production lines.

In some embodiments, the single-stage grinding treatment of low-moisture, high-lipid processed food is conducted as a grinding process in which compressed air and low-moisture, high-lipid processed food are separately introduced into an enclosure that includes a truncated conical shaped section. After introduction, the compressed air travels generally along a downward path through the enclosure until it reaches a lower end thereof. The air flows back up from the lower end of the enclosure in a central region thereof until exiting the enclosure via an exhaust duct. The low-moisture, high-lipid processed food is separately introduced into an upper end of the enclosure, and the food becomes entrained in the air traveling downward through the enclosure until reaching the lower end of the enclosure.

During this movement of the processed food from the upper end of the enclosure down to the lower end thereof, the processed food is at least physically processed. The food also may be further dehydrated by use of heated compressed air in which it is suspended in the dynamic air flow system generated within the enclosure, to the extent the air temperature is maintained below the melting temperature of lipid content of the food being processed. During the same unit operation, the food is disintegrated into small particles in an extremely short period of time. Significant amounts of the introduced low-moisture, high-lipid processed food can be ground before reaching a lower end of the enclosure. As such, this attrition of the low-moisture, high-lipid processed food into granular form may be achieved without using a grinding device with moving mechanical parts.

Consequently, in these embodiments, a solid particulate product including ground food is discharged and recovered from the lower end of the enclosure, while air and any moisture vapor released from the food during processing within the unit is exhausted from the system via the exhaust duct In one particular embodiment, the enclosure is a two-part structure including an upper cylindrical shaped enclosure in which the compressed air and low-moisture, high-lipid processed food are separately introduced, and the cylindrical enclosure adjoins and fluidly communicates with a lower enclosure having the truncated conical shape that includes the lower end of the overall structure from which the processed feed material is dispensed.

Grinding low-moisture, high-lipid processed foods in accordance with embodiments of this invention offers numerous advantages over conventional schemes for disposal of low-moisture, high-lipid processed food. For one, costs associated with transporting and disposing of a food product are reduced or eliminated. The grinding treatment makes it possible to produce a granular food product from low-moisture, high-lipid processed food at a relatively low temperature, short duration procedure. The grinding treatment preferably may be achieved as a single-stage operation without impairing the desirable functional attributes of the food material, and without requiring different processes be performed in different equipment. Additionally, the process can be operated in a continuous mode as the compressed air is continuously exhausted from the system after entraining the food downward through the enclosure to its lower end, and ground food product material can be withdrawn from the lower end of the enclosure. Relatively little if any food residue is left on the inner walls of the processing unit, making it easy to clean and facilitating switching to a different type of processed food for processing within the unit. These advantages reduce process complexity, production time, and production and service costs.

### BRIEF DESCRIPTION OF THE DRAWINGS

Other features and advantages of the invention will become apparent from the following detailed description of preferred embodiments of the invention with reference to the drawings, in which:

FIG. 1 is a flow chart of a method for processing and re-using low-moisture, high-lipid processed food according to an embodiment of this invention.

FIG. 2 is a schematic view of a system useful for processing low-moisture, high-lipid processed food according to an embodiment of this invention.

FIG. 3 is a cross sectional view of the cyclone unit used in the processing system illustrated in FIG. 2.

FIG. 4 is a schematic view of a system useful for processing low-moisture, high lipid processed food according to another embodiment of this invention.

The features depicted in the figures are not necessarily drawn to scale. Similarly numbered elements in different figures represent similar components unless indicated otherwise.

### DETAILED DESCRIPTION OF THE PREFERRED EMBODIMENTS

Preferred embodiments of the invention will be described below with specific reference to unique processing of high-lipid processed foods, and particularly low-moisture, high-lipid content processed foods. For purposes herein, the term "low-moisture" as used to characterize a food material means food material containing less than about 14 wt.% total water content, as liquid, frozen and/or vapor. The term "high-lipid" as used to characterize a food material means food material containing no less than about 15 wt.% total lipid content. As indicated, "processed foods" encompasses finished process foods as well as partly processed raw food materials such as cocoa nibs.

Generally, low-moisture, high-lipid processed food is subjected to grinding into a small particle size within a short period of time in a grinding process performed in one unit operation. In general, the grinding process is implemented on a cyclonic type system that may be operated in a manner whereby the low-moisture, high-lipid processed food may be physically acted upon in a beneficial manner. A ground food product is obtained in a granulated form (e.g., a solid fine particulate).

For purposes herein, "grinding" a particle means crushing, pulverizing abrading, wearing, or rubbing the particle to break it down into smaller particles and/or liberate smaller particles, and includes mechanisms involving contact between moving particles, and/or between a moving particle and a static surface; and "drying" means dehydrating, i.e., reducing moisture content.

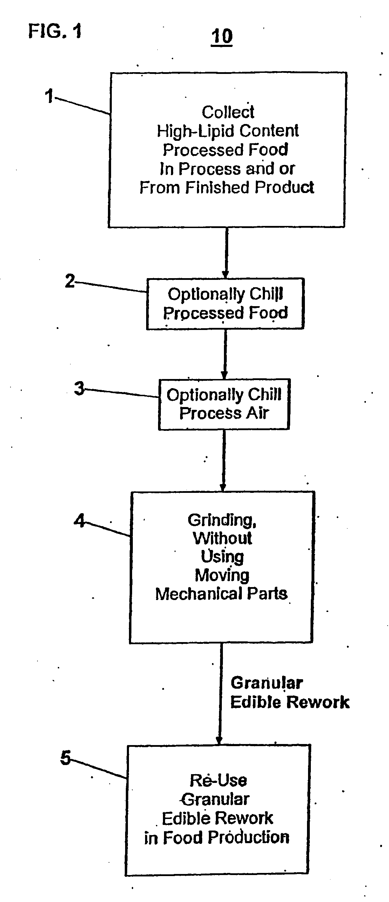

Referring to FIG. 1, in this non-limiting illustrated embodiment low-moisture, high-lipid processed food is collected in process or from finished food product (step 1), optionally is chilled (step 2) and/or the processing air is chilled (step 3), then the food is subjected to a grinding treatment (step 4), and the resulting granular food product thereof or "rework" is made available for re-use as a food ingredient (step 5).

In an optional step (step 2), the processed food-product may be pre-chilled before introduction into the cyclonic processing unit described herein to further inhibit melting from occurring with respect to the lipid content of the processed food. The processed food is chilled to a temperature sufficient to cool the lipid content of the food to a temperature below the melting temperature of the lipid, particularly the lipid present having the lowest melting temperature. This helps to protect the integrity of the lipid portion and prevent agglomeration or sticking of the food material to interior walls of the process unit during the grinding processing. If ambient air temperature conditions are below the melting point of the lipid content of the processed food, the need to chill the air or feed may be reduced or eliminated. In one embodiment, the temperature of the high lipid processed feed material (step 2), and/or the processing air (step 3) which will be used in the granulation process, as described in more detail below, is/are cooled to about 70°F or less before introduction into the cyclonic processing unit.

Upon completing step 4, a granular food product is obtained which is suitable for use in comestibles. For instance, the granulated food product obtained substantially retains its flavor and functional attributes through the grinding treatment. For instance, when the low-moisture, high-lipid food is a farinaceous-containing foodstuff, residual starch content of the low-moisture, high-lipid foods that remains after any prior cooking or other thermal treatments are performed on the processed food is substantially maintained through the grinding process according to the present invention, and thus is functionally available for re-use. It also may be re-used at relatively high levels in further food production lines.

The granular food product also may be stably stored until re-used in subsequent food production. The granulated food product may be used as a food ingredient in the same type ofprocessed food production line from which it was collected as an unused product material, or in a different type of processed food production line in which its flavor or functional attributes may be desirable or useful.

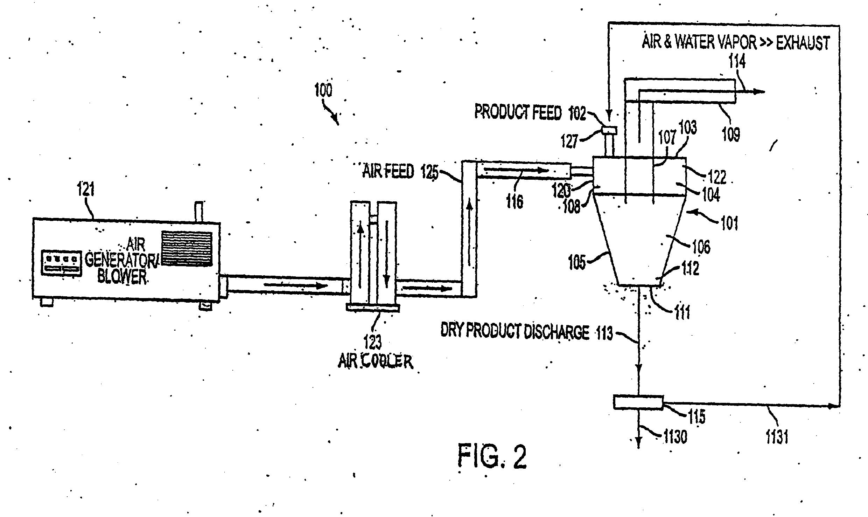

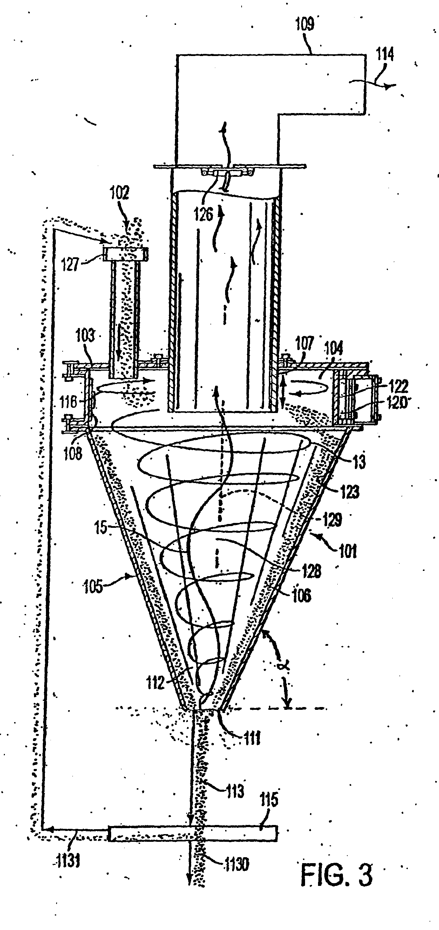

Referring now to FIGS. 2 and 3, details of an exemplary equipment arrangement and process of operating it for conducting the grinding of the low-moisture, high-lipid processed food in step 4 of FIG. 1 is discussed hereinafter. The low-moisture, high-lipid processed food that is introduced into the cyclonic system for treatment in the process of this invention may be derived from commercial food manufacture or other sources of low-moisture, high-lipid processed food materials. The low-moisture, high-lipid processed food may be in the form of discrete whole pieces as originally manufactured, or as portions, parts, fragments, shreds, fragments, and so forth thereof.

Referring to FIG. 2, an exemplary system **100** for performing grinding of low-moisture, high-lipid processed food according to a process embodiment of this invention is shown. Cyclone **101** is a structural enclosure comprised of two fluidly communicating sections: an upper cylindrical enclosure **103** defining a chamber **104;** and a lower truncated conical shaped enclosure **105** that defines a cavity **106.** Both the upper and lower enclosures are annular structures in which a solid wall or shell encloses an interior space. In this illustration, the upper enclosure **103** has a generally uniform cross-sectional diameter, while the lower enclosure **105** tapers inward towards its lower end **112.** In a non-limiting embodiment, the taper angle α of lower enclosure **105** may range from about 66 to about 70 degrees (see FIG. 3). For purposes herein, the terminology "enclosure" means a structure that encloses a chamber, cavity, or space from more than one side.

Compressed air **116** and low-moisture, high-lipid processed food **102** are separately introduced into the cyclone **101** at the upper enclosure **103.** The processed low-moisture, high-lipid processed food is discharged as a solid particulate **113** from the lower end **112** of the cyclone **101.** An optional valve mechanism **111,** such as a rotary valve or rotary air-lock, is shown that permits extraction of dried, ground food from the cyclone without interrupting continuous operation of the system and which minimizes leakage of the introduced air from the cyclone **101.** Alternatively, a hollow cylindrical extension shaft (not shown), optionally may be installed on the lower end **112** of the cyclone **101** to help direct granulated product into a receptacle or the like situated below the cyclone. In the absence of a valve mechanism at the lower end **112** of the cyclone **101,** the pressurized air introduced into the cyclone also will escape from the cyclone **101** via opening **111** at the cyclone's lower end **112.** This additional air loss may need to be need to be compensated for in the inlet air feed rate to sustain a desired air pressure condition inside the cyclone, such as by increasing it sufficient to offset air loss occurring from both the bottom of the cyclone as well as the exhaust gas stream **114**.

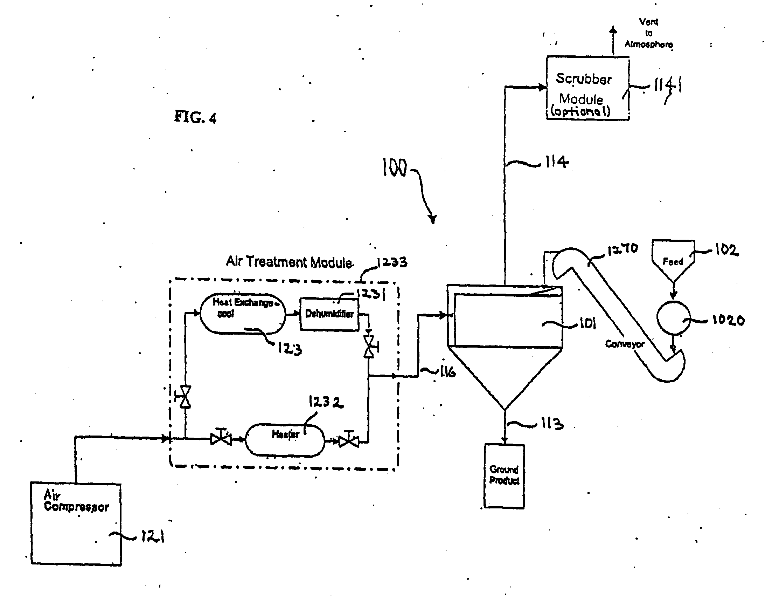

Air, and possibly some small amount of moisture vapor released from the low-moisture, high-lipid food during treatment within the cyclone **101,** is exhausted as exhaust gases **114** from the cyclone via sleeve **107** and exhaust duct **109.** Some nominal amount of light debris may be liberated from the food during processing in the cyclone, and may be eliminated with the exhaust gas stream **114.** The exhaust gas stream **114** optionally may be particle filtered, and/or scrubbed to strip out volatile compounds or other compounds, such as using a separate scrubber module, e.g. a packed bed type scrubber, before it is vented to the atmosphere (e.g., see FIG. 4, feature **1141**). Sieving device **115** is described in more detail later herein.

To introduce the compressed air **116** into cyclone **101,** an air pressurizing mechanism **121,** such as a blower or air compressor, generates a high volume, high velocity compressed air stream that is conducted via air ducting **125** through a cooling unit **123,** and from there is introduced into upper enclosure **103** of cyclone **101.** The term "compressed air" refers to air compressed to a pressure above atmospheric pressure, e.g., above 14.7 psia (lb./inch² absolute) (0.1MPa). Heating the compressed air before its introduction into the cyclone 101 ordinarily is not desirable or necessary for embodiments herein, although in certain situations, such as described hereinafter, it may be useful. Heating the compressed air generally is undesired as it may induce melting of any heat-sensitive portion of the processed food material being processed in the cyclone. In one embodiment, the compressed air is cooled to a temperature below the glass-transition temperature of a heat-sensitive portion of the edible feed material before it is introduced into cyclone **101.** In one particular embodiment, the air is cooled to a temperature of 35 to 75°F(1.6 to 23.9°C), particularly 40 to 70°F(4.4 to 21.1°C), and more particularly 60 to 70°F(15.6 to 21.1 °C). In another embodiment, air may be introduced into the cyclone at ambient temperatures without being heated to the extent the air temperature is below the melting temperature of the lipid portion of the food being processed. That is, if the air temperature of the air as discharged from the compressor **121** is below the melting temperature of the lipid components of the food being processed, it may not be necessary to conduct the air through air cooler **123** in an operating mode before the air is fed into the cyclone. The ambient air temperature and any air temperature changes associated with compression preferably is monitored before running air without use of the air cooler. The air cooler **123** may be a heat exchanger device. The air cooler **123** may be a commercial or industrial heat exchanger unit, or a refrigeration unit or other suitable cooling device, e.g. a cooling unit capable of reducing the temperature of continuous flow process air to within

### 10°F (about 6°C) of the coolant temperature.

The compressed air **116** is introduced into chamber 104 substantially tangentially to an inner wall **108** of the upper enclosure **103.** This can be done, for example, by directing the air stream **116** to a plurality of holes **120** (e.g., 2 to 8 holes) circumferentially spaced around and provided through the wall **108** of the upper enclosure **103** through which the air stream is introduced. Deflection plates **122** can be mounted on inner wall **108** of upper enclosure **103** for deflecting the incoming stream of air into a direction substantially tangential to the inner wall **108** according to an arrangement that has been described, for example, in U.S. patent application publication no. 2002/0027173 A1. The compressed air may be introduced into the upper enclosure **103** of cyclone **101** in a counter-clockwise or a clockwise direction.

The introduced air 10 generally may be further pressurized cyclonically in the chamber **104** and cavity **106.** Due to the centrifugal forces present in the cyclonic environment, it is thought that the pressure nearer the outer extremities of the cavity **106** is substantially greater than atmospheric pressure, while the pressure nearer the central axis of the cavity **106** is less than atmospheric pressure. As shown in FIG. 3, as a non-limiting illustration, after being introduced into upper enclosure **103,** the compressed air **116** spirals or otherwise travels generally along a large downward path as a vortex **13** through the upper enclosure **103** and the lower conical shaped enclosure **105** until it reaches a lower end **112** thereof. In this illustration, near the lower end **112** of the cavity **106** defined by the inner walls **123** of lower enclosure **105,** the downward direction of the air movement is reversed, and the air (and any moisture vapor released from the food during treatment within the cyclone **101**) whirls back upwardly as a smaller vortex **15** generally inside the larger vortex **13.** The smaller vortex **15** flows back up from the lower end **112** of the lower enclosure **105** in a central region **128** located proximately near the central axis **129** of the cyclone **101** and generally inside the larger vortex **13.** The smaller vortex **15** flows upward until exiting the enclosure via sleeve **107** and then exhaust duct **109.**

A vortex breaking means (not shown) optionally can be interposed below or inside the lower end **112** to encourage the transition of the larger vortex **13** to the smaller vortex **15.** Various vortex breaking arrangements for cyclones are known, such as the introduction of a box-shaped enclosure at the bottom of the conical enclosure.

The low-moisture, high-lipid processed food **102** is separately introduced into upper enclosure **103.** The introduced low-moisture, high-lipid processed food drops gravitationally downward into chamber **104** until they become entrained in the vortex **13** within cyclone **101.** Preferably, the low-moisture, high-lipid processed food is introduced into upper enclosure **103** in an orientation such that they will fall into the cyclonic vortex **13** generated within cyclone **101,** where located in the space between the sleeve **107,** and inner wall **108** of the upper enclosure **103.** This feed technique serves to minimize the amount of low-moisture, high-lipid processed food that may initially fall into extreme inner or outer radial portions of the vortex where the cyclonic forces that the food experiences may be lower. As indicated, the feed material **102** may be prechilled before it is introduced into the cyclone **101** by pre-storing or conveying the feed material in or through any suitable chilling device **1020** suitable for that purpose, e.g., such as a commercial or industrial heat exchanger or refrigeration unit. The entrained food travels in the vortex **13** of air spiraling or otherwise traveling downward through the lower enclosure **105** until reaching the lower end **112** of the lower enclosure **105.** During this downward flow path, the grinding effects on the food may occur at different times respective times and at different places during the downward flow path of the food through the cyclone. While not desiring to be bound to any theory, it is thought that pressure-gradient and coriolis forces across, cavitation explosions, and the collision interaction between the food particles entrained in the high-velocity cyclonically pressurized air may be violently disruptive to the physical structure of that food material. Alternatively, or in addition thereto, the centrifugal force of the vortex may move the food material forcefully against inner walls **108** and **123** of the enclosure. These modes of attrition, individually or in combination, or other modes of attrition that may occur within the cyclone which may not be fully understood, bring about comminuting (grinding) of the food concurrent with any drying of it. As a result, during this movement of the food from the upper enclosure **103** down to the lower end **112** of the lower enclosure **105,** the processed food is physically processed in beneficial ways. The unit **101** requires no mechanical moving parts for effecting grinding of the processed food.

In a further embodiment of the invention, the discharged solid particulate product **113** can be screened, such as using a sieve, such as a screen sieve or other suitable particulate separation/classifying mechanism **115,** to sort and separate the finer fraction of ground food **1130** in the solid particulate product **113** that have particle sizes meeting a size criterion, such as being less than a predetermined size, which are suitable for post-grinding processing, from the coarser product fraction **1131.** The coarser (oversize) product fraction **1131** can be redirected into the upper enclosure of the cyclone for additional processing therein. A conveyor (not shown) could be used to mechanically transport the redirected coarser material back to feed introducing means **127** or other introduction means in upper enclosure **103** of cyclone **101.** Also, feed introducing means **127** may be an inclined conveyor, screw feeder, etc. (e.g., see FIG. 4, feature 1270), which transports feed material into chamber **104** of the cyclone **101** at the upper enclosure **103.**

It will be appreciated that sleeve **107** can be controllably moved up and down to different vertical positions within cyclone **101.** In general, the lower sleeve **107** is spaced relative to the cavity **106,** the smaller the combined total volume of the cyclone **101** which is available for air circulation. Since the volume of air being introduced remains constant, this reduction in volume causes a faster flow of air, causing greater cyclonic effect throughout cavity **106** and consequently causing the food to be ground to circulate longer in the chamber **104** and the cavity **106.** Raising the sleeve **107** generally has the opposite effect For a given feed and operating conditions, the vertical position of sleeve **107** can be adjusted to improve process efficiency and yield.

Also, a damper **126** can be provided on exhaust duct **109** to control the volume of air permitted to escape from the central, low-pressure region of cavity 106 into the ambient atmosphere, which can affect the cyclonic velocities and force gradients within cyclone **101.** Other than the optional damper, the unit **101** generally requires no moving parts for operation, and particularly with respect to effecting the grinding action which occurs within the unit.

By continually feeding processed food into cyclone **101,** a continuous throughput of ground food product material **113** is obtained. A non-limiting example of a commercial apparatus that can be operated in a continuous manner while processing food according to processes of this invention is a WINDHEXE apparatus, manufactured by Vortex Dehydration Systems, LLC, Hanover Maryland, U.S.A. Descriptions of that type of apparatus are set forth in U.S. patent application publication no. 2002/0027173 A1.

The cyclonic system **100** provides mechanical energy to disintegrate and granulate the processed food. The food exiting the cyclone **101** exhibits a flowable solid particulate type form, which may be a flour-like or powdery material.

The processing unit **101** may be left relatively clean and tidy, as low-moisture, high-lipid processed material does not tend to cling as residue to the interior walls of the process unit used to grind the material into granular form. This can facilitate any desired change-over for processing a different type of feed material within the same unit. In one process scheme for processing low-moisture, high-lipid processed food, the introduction of the compressed air into the cyclone comprises supplying compressed air at a pressure within the range of from 10 psig (0.07MPa) to 100 psig (0.7MPa), particularly from 20 psig (0.14MPa) to 35 psig (0.24MPa), and more particularly from 26 psig (0.18MPa) to 32 psig (0.22MPa)

The volumetric introduction rate of the compressed air into the cyclone is within the range of from 500 cubic feet per minute (CFM) (0.24m³/s) to 10,000 cfm (4.72m³/s), particularly from 1,000 CFM (0.47m³/s) to 6,000 CFM (2.83m³/s), and more particularly from 1,500 cubic feet per minute (0.71m³/s) to 3,000 cubic feet per minute (1.42m³/s).

The feed rate of the low-moisture, high-lipid processed food can vary, but generally may be in the range of 1 to 300 pounds per minute (7.6g/s to 2268g/s), particularly 50 to 150 lbs./min(378g/s to 1134g/s), for a 1 to 10 foot (30cm to 300cm) diameter (maximum) cyclone. The cyclone diameter may be, for example, from 1 to 10 feet (30cm to 300cm) in diameter, particularly 1 to 6 feet (30cm to 150cm) in diameter.

The low-moisture, high-lipid processed food may be processed within the above-noted cyclone arrangement within a very short period of time. In one embodiment, upon introducing the low-moisture, high-lipid processed food into the cyclone, a granulated product thereof is discharged from the processing unit within 15 seconds, and particularly within 1 to 5 seconds. Volatile components also may be handled by conducting the cyclone exhaust through a scrubber unit and the like after it exits the cyclone unit.

Substantially all the introduced low-moisture, high-lipid processed food may be discharged as processed product within such a short period of time. The above-noted processing temperatures and durations applied during grinding of the low-moisture, high-lipid processed food generally are low enough to help prevent any significant undesired changes in the starch structure, or other physico-chemical attributes relevant to food-processing, from occurring during the grinding treatment such as described herein. Any starch content present in the low-moisture, high-lipid food (before granulation) is preserved substantially intact through the grinding treatment performed in accordance with this invention on the low-moisture, high-lipid processed food. Conventional milling generally employs moving parts to effect attrition of a material, which tends to generate localized heat. Intense or unduly elevated heat may increase the risk of degradation of desirable food functional features.

In one embodiment, the low-moisture, high-lipid processed food used as the feed material of a grinding process generally contains at least 15 wt.%, and particularly 15 wt.% to 60 wt.% lipid content, and less than 14 wt.% moisture, and generally from 1 wt.% to 14 wt.% moisture when introduced into the cyclone **101** of system **100.** The compressed air fed into the cyclone normally ordinarily is unheated, or at least is not heated to a temperature that closely approximates or exceeds a melting temperature of a lipid component of the food material being processed. In one embodiment, the food material is processed at a cooled or at least at a nonheated temperature, such as at a temperature of 65 to 75°F ( 18 to 24°C), or lower temperatures. The ground (granulated) portion of the food product obtained from the process generally contains 1 wt.% to 14 wt.% moisture content.

It may be necessary to dehumidify the compressed air before it is introduced into the cyclone unit in high relative humidity (RH) conditions (e.g. RH greater than 50%) to ensure that the feed material can be attrited into granular form and does not build-up into a sticky or pasty mass inside the cyclone. The air may be dehumidified using a conventional cooling coil unit or similar device used for dehumidification of process air (e.g., see FIG. 4, feature **1231**). The dehumidifier or air dryer **1231** may be a commercial unit for the general purpose, e.g., a Model MDX 1000 air dryer from Motivair, Amherst, NJ.

The heat exchanger (cooler) **123,** dehumidifier **1231,** and a heater **1232** that typically is not used in practicing embodiments of this invention, are units of a subsystem represented as air treatment module **1233** in FIG. 4. As indicated in FIG. 4, control valves and the like may be used to selectively control and manage air flow through the various air treatment units in module **1233.**

Ground food product obtained by a grinding process preferably has commercially useful particle sizes. In one embodiment, the dried, ground food product obtained by processing low-moisture, high-lipid processed food according to an embodiment of this invention generally may have an average particle size of 1 micron to 1,000 microns, particularly 2 to 1,000 microns. In one embodiment, the solid particulate product obtained as the bottoms of the cyclone comprise at least 50% ground food product having an average particle size of 1 micron to 1,000 microns.

The granular food product obtained in accordance with embodiments of this invention is edible and may be used in a wide variety of foodstuffs for a variety of purposes. The granulated food product preferably does not have an unpleasant taste or odor, and may be easily processed with doughs, processed meats, and other processed foods without loss of quality. For example, the granulated food product of embodiments of this invention serves as an economical replacement for original ingredients used in such food products. The granulated food product has ability to contribute flavor and function without adversely impacting such food products. The granulated food product obtained generally is shelf stable, and may be used to impart flavor and/or functional properties to a food product being manufactured after many months of storage of the granulated food product, such as up to about twelve months storage/shelf life or more.

The low-moisture, high-lipid processed food that can be used as the feed material in the process of this invention can be derived from commercial food manufacture or other sources of low-moisture, high-lipid processed food product.

In some preferred embodiments, the low-moisture, high-lipid processed foods that may treated comprise filled products including a lipid-containing filling portion and a grain-based portion used in a sandwich, encapsulating, wrapping, sheathing or enrobing portion.

The lipid-containing filling portion may include a filler cream containing a fat or oleaginous composition which is both edible and soft or "spreadable" at ordinary storage temperatures. For example, filler creams have been used in baked goods in a variety ways, which may be present in processed foods granulated according to embodiments herein. A filler cream may be used as a laminate or "sandwich" filler material between two cookies or crackers, or alternatively it may be inserted into a baked pastry or other food product by injection or co-extrusion, or encapsulation.

Filler creams of this type, for example, may comprise a fat or oleaginous composition, sugar, and flavoring as primary ingredients. The fats and oleaginous compositions can be obtained from numerous edible lipid sources and can comprise numerous mixtures of oils, both fractionated and unfractionated, and having various degrees of hydrogenation. The fat or oleaginous composition component of the filler cream may include animal and/or vegetable fats or oils. The fat or oleaginous composition may comprise, for example, a fat index of from 15 to 34 percent solid material at 70°F(21.1 °C), and from 0.7 to 6 percent solid material at 92°F(33.3 °C).

A filler cream composition, for example, may contain 30 to 60 wt.% fat or oleaginous content, and the remainder may include one or more of sugar, sugar substitute, flavoring, dairy product, processing aids, and so forth, sufficient to provide a spreadable creamy composition. Suitable flavorings and extracts are commercially available, and include, for example, vanilla, chocolate, coffee, peanut butter, mint, cheese, and so forth. The dairy product may be, for example, nonfat dry milk. Emulsifiers, flow improvers (e.g. lecithin), and/or other processing aids may be used. The filler composition may comprise a spreadable creamy formulation having a density of 0.7 to 0.85. Other lipid-containing filler compositions can exist and be used.

The filled products may include grain-based portions, for example, dough based-materials, such as base cake to sandwich or enrobe a filling portion of the filled products. The grain-based materials may include one or more principal parts of cereal grain, such as the pericarp or bran (external layer of grain), the endosperm (farinaceous albumen containing starch), or the germ (seed embryo). Examples are cereal grains, meals, flours, starches, or glutens, obtained from grinding cereal grains, such as wheat, corn, oats, barley, rice, rye, sorghum, milo, rape seed, legumes, soy beans, triticali, and mixtures thereof, as well as various milling materials of such cereal grains, such as bran. In one embodiment, the low-moisture, high-lipid processed food generally may contain, on a dry basis, a grain-based portion containing 1 to 99 wt.%, and particularly 5 to. 95 wt.% grain-based ingredient, and the remainder thereof may be comprised of non-grain based agricultural food materials, and/or food additives.

In one embodiment, the grain-based portion comprises a farinaceous material, and particularly a farinaceous material obtained or derived from cereal grain(s). Farinaceous materials include the above-noted cereal grains, meals or flours, as well as tuberous foodstuffs, such as potatoes, tapioca, or the like, and flours thereof. These starch-containing materials can be processed without incurring undue gelatinization or other undesirable changes. The grinding unit described herein permits relatively short duration, low temperature processing to be used, which is thought to help inhibit and avoid starch transformations (e.g., gelatinization) during processing. Where the grain-based portion comprises cooked dough, for example base cake, it need not be prepared from a special formula, and may include flour, water, fat or shortening, sugar, and other standard dough ingredients. In filled sandwich products, the base cake may be prepared to be relatively - harder than the filling, although this is not required.

In one embodiment, the filled products are collected from a processed food production line as whole pieces, or broken and/or rejected parts thereof. These materials may be ground in a single-stage grinding procedure in accordance with an embodiment of this invention to yield a re-usable food grade granular product. For example, the granular product substantially retains significant original (i.e., pretreatment) lipid and starch structure in the processed food remaining after any cooking of the processed food, such that it is still suitable for a fresh food product manufacture. It may provide at least in part a stable functional substitute for fresh dough ingredients such as flour (base cake) and/or filling ingredients.

The filled food products suitable for single-stage treatment may include those produced by co-extruding a dough-like mixture with non-dough lipid-containing filler materials. The co-extrudate may be formed by the use of a concentric die or tube inserted within the die orifice. Filled products may also be produced by transporting the dough-like mixture extrudate to a conventional enrobing or encrusting machine for post-extrusion filling with a filler material. The extrudate pieces may be leavened and further browned. The low-moisture, high-lipid materials thereof may be collected as part of food manufacture processing performed on finished food products.

Examples of lipid-containing fillers which may be present and processed include vanilla-flavored cream fillings, chocolate-flavored cream fillings, milk chocolate, cheese, peanut butter, mint, and so forth. The filling material may also be a separately produced dough-like mixture for the production of multi-flavored, multi-colored, or multi-textured cookie products.

The filled products may be, for example, cheese-filled or cream-filled cookies, crackers, snack foods, and so forth. Filled food products which may be treated include those such as described in U.S. Pat. Nos. 5,612,078; 5,374,438; 4,711,788; 5,015,466; and 5,000,968. Commercial examples of filled products that may be processed include, for example, Nabisco OREO® sandwich cookies, Nabisco NUTTER BUTTER® sandwich cookies, Nabisco CHIPS AHOY® CREMEWICHES cookies, Nabisco CHIPS AHOY® COOKIE BARZ®, Nabisco RITZ BITZ® cheese sandwich crackers, and Nabisco RITZ BITZ® peanut butter sandwich crackers, and the like.

The granulated product obtained by the single-stage treatment of filled food products may be used as a replacement for fresh ingredients in a food production line at substantially unrestricted levels. In some embodiments, the granulated product obtained from low-moisture, high-lipid dough may be used at levels of 0.1 wt.% or more, and more particularly 1 to 99 wt.%, in place of fresh flour in a dough batch for base cake, or alternatively, as a lipid-containing filling ingredient.

The Examples that follow are intended to illustrate, and not limit, the invention. All percentages are by weight, unless indicated otherwise.

### EXAMPLES

**Example 1**

Nabisco® OREO® sandwich cookies (1.5-3.5 wt.% moisture) were fed into a WINDHEXE apparatus for circular vortex air-flow material grinding. The WINDHEXE apparatus was manufactured by Vortex Dehydration Systems, LLC, Hanover, Maryland, U.S.A. The basic configuration of that type of apparatus is described in U.S. patent application publication no. 2002/0027173 A1, and reference is made thereto. The process unit had four inlet ports equidistantly spaced around the upper portion of the apparatus through which the compressed air stream was concurrently introduced in a counter-clockwise direction.

A two-foot (60cm) diameter WINDHEXE apparatus was tested. The diameter size refers to the chamber size of the enclosure into which air and low-moisture, high-lipid processed food introductions were made. The conditions of this experiment are described below. The feed rate of the low-moisture, high-lipid cookies was set for an approximate discharge of three pounds solid product per minute (22.7g/s), and approximately 20 pounds (9kg) of food material was tested in the apparatus. The low-moisture, high-lipid processed food was loaded into a hopper that directly fed onto a three-inch (7.6cm) belt conveyor that fed into the WINDHEXE apparatus. Testing was performed in the 2-foot (61 cm) diameter WINDHEXE apparatus with compressed air introduced at 65°F(18.3°C), an air introduction rate of 1,000 cubic feet per minute (cfm) (0.5m³/s) and pressure of 20-35 psig (0.14 to 0.24MPa).

A food product exiting the apparatus was in finely ground form. This granulated food product was discharged from the bottom of the cyclone in about two seconds after the low-moisture, high-lipid processed food had been introduced into the processing unit. The granulated food product obtained had an average particle size of 5 to 50 microns, and a moisture content of 1.5-3.5 wt.%. It was shelf stable, well-retained flavor through the grinding treatment.

REWORK STUDIES:

Rework studies were performed to compare the processability and sensory attributes of cookies prepared with reground base cake derived from the cookies subjected to the cyclonic grinding operation as described above, as compared to cookies prepared with a similar amount of base cake rework which instead was obtained from mechanically grinding OREO® sandwich cookies to similar particle sizes. For the exemplary cookie dough and the comparison cookie dough, the base cake doughs were formulated with addition of 5 parts rework per hundred parts base cake. To prepare the respective doughs, sugar, hot water, cocoa, salt, flavors and the rework base cake component were combined and mixed for about four minutes. Then, liquid vegetable shortening was added with mixing for two minutes, followed by addition of flour with an additional six minutes of mixing. The doughs were cut into circular shapes and baked. The resulting cookies prepared with the rework obtained via the inventive processing scheme were comparable in terms of processability and sensory attributes to the cookies prepared with mechanically grind rework. It will be appreciated that the rework also may be useful in different food product lines.

The granulated product obtained did not substantially lose flavor or functionality during the grinding treatment, and was suitable as an edible ingredient for preparation of processed foods. The granular product also was a shelf stable powder and suitable for re-use as a batch ingredient in the same or different processed food production line.

Additional studies have shown that feed rate and air temperature variation may be used to control the low-moisture, high-lipid product granulation and moisture content

**Example 2**

Separate batches of roasted cocoa nibs (1.5-3.5 wt.% moisture, 54% lipid content) and unroasted cocoa nibs 1.5-3.5 wt.% moisture, 54% lipid content were fed into a WINDHEXE apparatus for circular vortex air-flow material grinding. Cocoa nibs ordinarily refers to roasted cocoa beans, separated from their husks and broken into smaller bits. However, as noted above, a separate run was conducted for this example in which the cocoa nibs were composed of cocoa beans that had not been pre-roasted. The WINDHEXE apparatus was the same basic configuration as that described for Example 1, and reference is made thereto. A three-foot (91cm) diameter WINDHEXE apparatus was tested. The diameter size refers to the chamber size of the enclosure into which air and low-moisture, high-lipid processed food introductions were made. The conditions of this experiment are described below. The feed rate of the cocoa nibs was set for an approximate discharge of three pounds solid product per minute, and approximately 20 pounds (9kg) of food material was tested in the apparatus for each batch of cocoa nibs. Cocoa nibs were loaded into a hopper that directly fed a screw feeder that fed into the WINDHEXE apparatus. Testing was performed in the three-foot (91cm) diameter WINDHEXE apparatus with compressed air introduced at 65°F(18.3°C), an air introduction rate of 1,000 cubic feet per minute (cfm) (0.5m³/s) and pressure of 40-55 psig (0.28 to 0.38MPa). Respective finely ground product streams were discharged from the bottom of the cyclone in about 2 seconds.

Granulated product material of each test run was collected and subjected to particle size sieving to determine the particle size distribution. A batch of unroasted and untreated cocoa nibs, i.e., it was not processed in the cyclone, also was sieved. The results of the particle size sieving operations are provided in Table 1 below, wherein the entries indicate the percentage of the product material of the particular batch which remained on a given screening surface having the indicated mesh size opening as oversize or "plus" material.

**Table 1**

| Cocoa Nibs Batch Type | SIEVING PARTICLE SIZE (µm) | | | | | | | | |
|---|---|---|---|---|---|---|---|---|---|
| | +6300 | +4000 | +3150 | +1000 | +500 | +250 | +150 | +125 | +100 |
| Unroasted/ Untreated | 4.47 | 44.38 | 72.39 | 98.99 | - | - | - | - | - |
| Unroasted/Cyclone Treated | - | - | - | 0.08 | 29.17 | 76.29 | 98.56 | 99.58 | 99.69 |
| Roasted/Cyclone Treated | - | - | - | 0.66 | 43.55 | 96.15 | 99.82 | 100 | 100 |

The results in Table 1 show that both the unroasted and roasted cocoa nibs were significantly ground by the cyclone processing as compared to the untreated material. The respective granulated products were shelf stable and well-retained sensory attributes such as flavor through the grinding treatment.

While the invention has been particularly described with specific reference to particular process and product embodiments, it will be appreciated that various alterations, modifications and adaptations may be based on the present disclosure, and are intended to be within the scope of the present invention as defined by the following claims.

## Claims

1. A process for reworking low moisture, high-lipid content processed food in processed food manufacture, comprising:
introducing compressed air into an enclosure that includes a truncated conical shaped section, wherein the introduced air travels along a downward path through the enclosure, including the conical section, to a lower end thereof, and the air reaching the lower end flows back up and exits the enclosure via an exhaust outlet;
introducing into the enclosure processed food containing at least about 15 wt.% lipid content and less than 14 wt.% total water content, which is entrained in the introduced air traveling downward through the enclosure, wherein at least a portion of the processed food is ground before reaching the lower end of the enclosure;
discharging a granular product including ground food product from the lower end of the enclosure;
combining at least a portion of the granular product and at least one different processed food ingredient; and
preparing a processed food product therewith.

2. The process of Claim 1, wherein the granular product has an average particle size of 1 micron to 1,000 microns.

3. The process of any one of Claims 1 or 2, wherein the processed food comprises outer layers comprising a grain-based ingredient and an intermediate layer disposed between the outer layers comprising lipid.

4. The process of any one of Claims 1 to 3, wherein the processed food is selected from the group consisting of cookies, crackers, confectionaries, and desserts.

5. The process of any one of Claims I to 4, wherein the introducing of the compressed air comprising supplying compressed air at a pressure within the range of from 10 psig (0.07MPa) to 100 psig (0.7MPa).

6. The process of any one of Claims 1 to 5, wherein the introducing of the compressed air comprises supplying compressed air at a pressure within the range of from 20 psig (0.14MPa) to 35 psig (0.24MPa).

7. The process of any one of Claims 1 to 6, wherein the introducing of the compressed air comprises supplying the compressed air at a temperature not exceeding 75°F (23.9°C).

8. The process of any one of Claims 1 to 6, wherein the introducing of the compressed air comprises supplying the compressed air at a temperature not exceeding a melting temperature of the lipid content.

9. The process of any one of Claims 1 to 6, wherein the introducing of the compressed air comprises (a) compressing ambient air which is at a first temperature exceeding 75 °F (23.9°C) before compression, (b) cooling the compressed air to a second temperature, lower than the first temperature, which is below 75°F(23.9°C), and feeding the cooled compressed air into the enclosure.

10. The process of any one of Claims 1 to 9, wherein the introducing of the compressed air comprises supplying the compressed air at a rate of within the range of from 500 cubic feet per minute (0.24m³/s) to 10,000 cubic feet per minute (4.72m³/s).

11. The process of any one of Claims 1 to 10, wherein the introducing of the compressed air comprises supplying the compressed air at a rate within the range of from 1,500 cubic feet per minute (0.71m³/s) to 3,000 cubic feet per minute (1.42m³/s).

12. The process of any one of Claims 1 to 11, wherein the introducing of the compressed air into the upper cylindrical enclosure occurs in a direction oriented generally tangentially to inner walls of the cylindrical enclosure.

13. The process of any one of Claims 1 to 12, wherein the upper cylindrical enclosure has a substantially constant diameter of 1 to 10 feet (30cm to 300cm), and the lower enclosure comprises a truncated conical shape having a maximum diameter size where the lower enclosure adjoins the cylindrical enclosure and the maximum diameter of the lower enclosure is substantially the same as the diameter of the cylindrical enclosure.

14. The process of any one of Claims 1 to 13, wherein the processed food contains 15 to 60 wt.% lipid content.

## Patentansprüche

1. Verfahren zur Nachverarbeitung eines feuchtigkeitsarmen verarbeiteten Nahrungsmittels mit hohem Lipidgehalt bei der Herstellung verarbeiteter Nahrungsmittel, bei dem man
komprimierte Luft in ein Behältnis einführt, das einen kegelstumpfförmigen Abschnitt hat, wobei sich die eingeführte Luft längs eines Abwärtsweges durch das Behältnis einschließlich des konischen Abschnitts zu seinem unteren Ende bewegt und die das untere Ende erreichende Luft aufwärts zurückströmt und durch einen Ausströmausgang aus dem Behältnis austritt,
in das Behältnis verarbeitetes Nahrungsmittel mit einem Lipidgehalt von wenigstens etwa 15 Gew.-% und einem Gesamtwassergehalt von weniger als 14 Gew.-% einführt, das in der sich durch das Behältnis abwärts bewegenden eingeführten Luft mitgenommen wird, wobei wenigstens ein Teil des verarbeiteten Nahrungsmittels vor Erreichen des unteren Endes des Behältnisses gemahlen wird,
ein körniges Produkt einschließlich gemahlenes Nahrungsmittelprodukt von dem unteren Ende des Behältnisses abzieht,
wenigstens einen Teil des körnigen Produkts und wenigstens einen anderen verarbeiteten Nahrungsmittelbest.andteil vereinigt und
damit ein verarbeitetes Nahrungsmittelprodukt zubereitet.

2. Verfahren des Anspruchs 1, bei dem das körnige Produkt eine mittlere Teilchengröße von 1 Mikron bis 1000 Mikron hat.

3. Verfahren des Anspruchs 1 oder 2, bei dem das verarbeitete Nahrungsmittel einen kornbasierten Bestandteil enthaltende Außenschichten und eine zwischen den Außenschichten angeordnete, Lipid enthaltende Zwischenschicht aufweist.

4. Verfahren eines der Ansprüche 1 bis 3, bei dem das verarbeitete Nahrungsmittel aus der Gruppe ausgewählt wird, die aus Gebäck, Keksen, Konfekt und Süßspeisen besteht,

5. Verfahren eines der Ansprüche 1 bis 4, bei dem die Einführung der komprimierten Luft die Zuführung komprimierter Luft bei einem Druck in dem Bereich von 10 psig (0,07 MPa) bis 100 psig (0,7 MPa) umfaßt.

6. Verfahren eines der Ansprüche 1 bis 5, bei dem die Einführung der komprimierten Luft die Zuführung komprimierter Luft bei einem Druck in dem Bereich von 20 psig (0,14 MPa) bis 35 psig (0,24 MPa) umfaßt.

7. Verfahren eines der Ansprüche 1 bis 6, bei dem die Einführung der komprimierten Luft die Zuführung der komprimierten Luft bei einer 75°F (23,9°C) nicht übersteigenden Temperatur umfaßt.

8. Verfahren eines der Ansprüche 1 bis 6, bei dem die Einführung der komprimierten Luft die Zuführung der komprimierten Luft bei einer Temperatur umfaßt, die eine Schmelztemperatur des Lipidgehalts nicht übersteigt.

9. Verfahren eines der Ansprüche 1 bis 6, bei dem die Einführung der komprimierten Luft umfaßt (a) die Komprimierung von Umgebungsluft, die vor der Kompression auf einer 75°F (23,9°C) übersteigenden ersten Temperatur ist, (b) die Kühlung der komprimierten Luft auf eine tiefere als die erste Temperatur, zweite Temperatur, die unter 75°F (23,9°C) ist, und die Einführung der gekühlten komprimierten Luft in das Behältnis.

10. Verfahren eines der Ansprüche 1 bis 9, bei dem die Einführung der komprimierten Luft ihre Zuführung mit einer Geschwindigkeit ihn dem Bereich von 500 Kubikfuß pro Minute (0,24 m³/s) bis 10.000 Kubikfuß pro Minute (4,72 m³/s) umfaßt.

11. Verfahren eines der Ansprüche 1 bis 10, bei dem die Einführung der komprimierten Luft ihre Zuführung mit einer Geschwindigkeit in dem Bereich von 1.500 Kubikfuß pro Minute (0,71 m³/s) bis 3.000 Kubikfuß pro Minute (1,42 m³/s) umfaßt.

12. Verfahren eines der Ansprüche 1 bis 11, bei dem die Einführung der komprimierten Luft in das obere zylindrische Behältnis in einer Richtung erfolgt, die im allgemeinen tangential zu Innenwandungen des zylindrischen Behältnisses gerichtet ist.

13. Verfahren eines der Ansprüche 1 bis 12, bei dem das obere zylindrische Behältnis einen im wesentlichen konstanten Durchmesser von 1 bis 10 Fuß (30 cm bis 300 cm) hat und das untere Behältnis eine Kegelstumpfform mit einer maximalen Durchmessergröße aufweist, wobei das untere Behältnis sich an das zylindrische Behältnis anschließt und der maximale Durchmesser des unteren Behältnisses im wesentlichen gleich dem Durchmesser des zylindrischen Behältnisses ist.

14. Verfahren eines der Ansprüche 1 bis 13, bei dem das verarbeitete Nahrungsmittel 15 bis 60 Gew.-% Lipidgehalt hat.

## Revendications

1. Procédé de remaniement de produits alimentaires transformés à faible teneur en humidité et riche en lipides, dans la fabrication de produits alimentaires transformés, comprenant les étapes suivantes :
l'introduction d'air comprimé dans une enceinte qui comprend une section de forme conique tronquée, dans lequel l'air introduit se déplace selon un trajet descendant au travers de l'enceinte, y compris la section conique, jusqu'à une extrémité inférieure de cette dernière, et l'air atteignant l'extrémité inférieure retourne vers le haut et sort de l'enceinte par l'intermédiaire d'une sortie d'échappement ;
l'introduction dans l'enceinte d'aliments transformés contenant au moins 15 % en poids de lipides et moins de 14 % en poids total d'eau, qui sont entraînés dans l'air introduit qui se déplace vers le bas dans l'enceinte, dans lequel au moins une partie des aliments transformés est broyée avant d'atteindre l'extrémité inférieure de l'enceinte ;
le déversement d'un produit granulaire comprenant des produits alimentaires broyés depuis l'extrémité inférieure de l'enceinte ;
la combinaison d'au moins une partie du produit granulaire et d'au moins un ingrédient d'aliment transformé différent ; et
la préparation d'un produit alimentaire transformé avec ces derniers.

2. Procédé de la revendication 1, dans lequel le produit granulaire possède une granulométrie moyenne allant de 1 micromètre à 1 000 micromètres.

3. Procédé de l'une quelconque des revendications 1 ou 2, dans lequel l'aliment transformé comprend des couches externes comprenant un ingrédient à base de céréales et une couche intermédiaire disposée entre les couches externes comprenant des lipides.

4. Procédé de l'une quelconque des revendications 1 à 3, dans lequel l'aliment transformé est choisi parmi le groupe constitué de biscuits, de biscuits salés, de pâtisseries, et de desserts.

5. Procédé de l'une quelconque des revendications 1 à 4, dans lequel l'introduction de l'air comprimé comprend l'alimentation en air comprimé à une pression allant de 0,07 MPa (10 psig) à 0,7 MPa (100 psig).

6. Procédé de l'une quelconque des revendications 1 à 5, dans lequel l'introduction de l'air comprimé comprend l'alimentation en air comprimé à une pression allant de 0,14 MPa (20 psig) à 0,24 MPa (35 psig).

7. Procédé de l'une quelconque des revendications 1 à 6, dans lequel l'introduction de l'air comprimé comprend l'alimentation en air comprimé à une température ne dépassant pas 23,9°C (75°F).

8. Procédé de l'une quelconque des revendications 1 à 6, dans lequel l'introduction de l'air comprimé comprend l'alimentation en air comprimé à une température ne dépassant pas la température de fusion des lipides présents.

9. Procédé de l'une quelconque des revendications 1 à 6, dans lequel l'introduction de l'air comprimé comprend (a) la compression de l'air ambiant qui est à une première température supérieure à 23,9°C (75°F) avant la compression, (b) le refroidissement de l'air comprimé pour atteindre une seconde température, inférieure à la première température, qui est inférieure à 23,9°C (75°F), et la conduite de l'air comprimé refroidi à l'intérieur de l'enceinte.

10. Procédé de l'une quelconque des revendications 1 à 9, dans lequel l'introduction de l'air comprimé comprend l'alimentation de l'air comprimé à un débit allant de 0,24 m³/s (500 pieds cubiques par minute) à 4,72 m³/s (10 000 pieds cubiques par minute).

11. Procédé de l'une quelconque des revendications 1 à 10, dans lequel l'introduction de l'air comprimé comprend l'alimentation de l'air comprimé à un débit allant de 0,71 m³/s (1 500 pieds cubiques par minute) à 1,42 m³/s (3 000 pieds cubiques par minute).

12. Procédé de l'une quelconque des revendications 1 à 11, dans lequel l'introduction de l'air comprimé dans l'enceinte cylindrique supérieure se produit dans une direction orientée généralement de manière tangentielle par rapport aux parois internes de l'enceinte cylindrique.

13. Procédé de l'une quelconque des revendications 1 à 12, dans lequel l'enceinte cylindrique supérieure possède un diamètre substantiellement constant allant de 30 cm à 300 cm (de 1 à 10 pieds), et l'enceinte inférieure a une forme conique tronquée ayant un diamètre maximal là où l'enceinte inférieure est contiguë à l'enceinte cylindrique et le diamètre maximal de l'enceinte inférieure est substantiellement identique au diamètre de l'enceinte cylindrique.

14. Procédé de l'une quelconque des revendications 1 à 13, dans lequel l'aliment transformé contient de 15 à 60 % en poids de lipides.
